# EUROPEAN PATENT SPECIFICATION

(11) **EP 2 297 241 B1**
(45) Date of publication and mention of the grant of the patent: **26.10.2011**
(21) Application number: 09789702.9
(22) Date of filing: 18.05.2009
(51) Int. Cl.: C08K 5/00, C08K 5/18, C08K 5/3492

(54) **SUBSTITUTED TRIAZINE COMPOSITIONS AND METHODS FOR PRODUCING SAME**
SUBSTITUIERTE TRIAZINZUSAMMENSETZUNGEN UND HERSTELLUNGSVERFAHREN DAFÜR
COMPOSITIONS DE TRIAZINE SUBSTITUÉE ET LEURS PROCÉDÉS DE FABRICATION

(30) Priority: 10.07.2008 US 170885
(43) Date of publication of application: 23.03.2011
(73) Proprietor: Chemtura Corporation, Middlebury, CT 06749 (US)
(72) Inventor: STIEBER, Joseph, F., Prospect CT 06712 (US); MADABUSI, Venkatramanan, K., Naugatuck CT 06770 (US); WHEELER, Edward, L., Southbury CT 06488 (US)
(74) Representative: Serravalle, Marco
(86) International application number: PCT/US2009/044337
(87) International publication number: WO 2010/005631

(56) References cited:
- EP-A- 0 305 190
- EP-A- 0 365 127
- US-A- 6 160 043

## Description

### BACKGROUND OF THE INVENTION

### Field of the Invention

This invention relates to substituted triazine compositions, and more specifically substituted triazine compositions that are liquid, as well as methods for producing same.

### Discussion of the Background Information

It is well known that ozone causes surface cracking of conventional highly unsaturated rubber vulcanizates when an elastomer article, such as rubber, is placed under strain in an ozone environment. The most severe deterioration occurs when a small number of cracks are formed which grow rapidly into deep, disruptive fissures. These ozone cracks seriously shorten the serviceable life of the elastomer article.

Chemical antiozonants have been developed which retard the formation of the ozone cracks occurring under static and dynamic conditions. Examples of antiozonant in common use include: N-phenyl-N'-(1,3-dimethylbutyl)-p-phenylenediamine; N-phenyl-N'-isopropyl-p-phenylenediamine; N-phenyl-N'-(1,4-dimethylpentyl)-p-phenylenediamine; N-phenyl-N'-(1-methylheptyl)-p-phenylenediamine; N-phenyl-N'-cyclohexyl-p-phenylenediamine; mixed diaryl-p- phenylenediamines; N,N'-diphenyl-p-phenylenediamine; N,N'-di-beta-naphthyl-p-phenylenediamine; N,N'-bis(1,4-dimelhylpentyl)-p-phenylenediamine; N,N'-bis(1-ethyl-3-methylpentyl)-p-phenylenediamine; N,N'-bis(1-methylheptyl)-p-phenylenediamine, N-phenyl-N'-p-toluenesulfonyl-p-phenylenediamine and blends of these materials.

the use of these well known para-phenylenediamine (PPDA) materials has improved ozone protection under both static and dynamic conditions. However, even the best of the above-described class have a very strong tendency to both stain and discolor. The term "stain" or "staining" is herein used to describe the characteristic of a material objectionable in most rubber articles, to diffuse through a polymeric substrate and discolor the adjacent surface. This diffusion staining is highly objectionable in most rubber articles, particularly light color articles.

Waxes have been long utilized to inhabit ozone cracking in articles under stress in static condition by incorporating the wax into the rubber compound prior to vulcanization. The wax functions by migrating to the surface of the rubber article to form a film which acts as a physical barrier to the ozone attack. However, during dynamic flexing, in service, the wax film is cracked or disrupted, and the tendency is for the article to exhibit fewer and more severe ozone cracks than if no wax had been incorporated. Therefore, for many service conditions, the use of wax is impractical due to the dynamic conditions under which the article is expected to perform.

The use of substituted triazine compounds, such as tris(N-alkyl-p-phenylenediamino)-1,3,5-triazine compounds, have also been effective in protecting against ozonation, as described in U.S. Patent Nos. 4,794,134, 4,794,135, 4,946,881, 4,936,405, 4,972,010, 5,047,530 5,068,271, 5,118,807, 5,120,779, 5,120,844, 5,126,385, 5,208,280 and 5,990,310, the entire contents and disclosures of which are incorporated herein by reference. Such substituted triazines provide ozone protection in static conditions at very low levels and to protect the rubber article during extended aging conditions against ozonation. However, due to low melt characteristics exhibited by such substituted triazines, they are difficult to handle due to sintering (i.e. exhibit caking) during storage and transportation. These properties are undesirable and result in increased production costs for elastomers containing such anti-ozonants. Thus, it is desirable to provide substituted triazine compositions that do not result in sintering during storage.

### SUMMARY OF THE INVENTION

In a first aspect of the present invention, there is provided a composition comprising: a compound of structure (1) comprising: 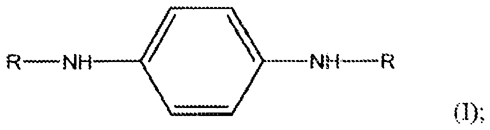 and a compound of structure (II) comprising: 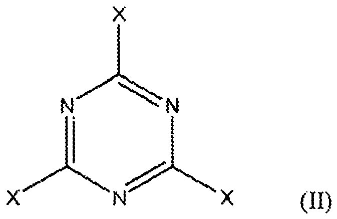 wherein X comprises the formula: 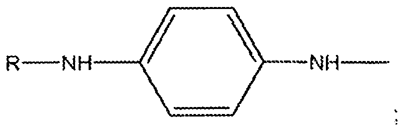 and
wherein R is selected from the group consisting of C₃-C₁₈ alkyl, C₃-C₁₈ cycloalkyl, and C₆-C₁₈ aryl. In one embodiment, the composition is a liquid composition. Such liquid compositions have a Brookfield viscosity at 100°C of from 10 to 20.000 cPs. Optionally R is selected from the group consisting of 1,4-dimethylpentyl, 1,2-dimethylbutyl, 1-methylheptyl, cyclohexyl, diphenyl, and sec-butyl.

In a second aspect of the present invention, there is provided an ozone resistant article comprising: an unsaturated elastomer; and a composition to protect the unsaturated elastomer from ozonation comprising: (a) a compound of structure (I) having the general formula: 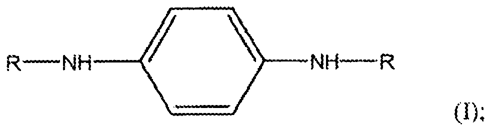 and (b) a compound of structure (II) having the general formula: 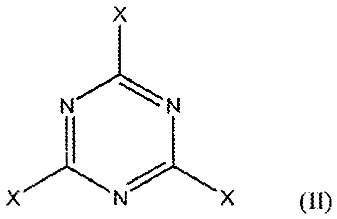 wherein X comprises the formula: 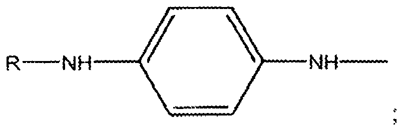 and
wherein R is selected from the group consisting of C₃-C₁₈ alkyl, C₃-C₁₈ cycloalkyl, and C₆-C₁₈ aryl. Such unsaturated elastomers may include diene elastomers, unsaturated polymers, natural rubbers, and mixtures or blends thereof.

In a third aspect of the present invention, there is provided a method for producing an antiozonant mixture comprising a substituted triazine and a N-alkyl-1,4-phenylenediamine, the method comprising reacting N-alkyl-1,4-phenylenediamine with cyanuric chloride in the presence of a N,N'-dialkyl-1,4-phenylenediamine to form the antiozonant mixture. Such method may further comprise reacting p-phenylenediamine and an aldehyde or ketone to form the N-alkyl-1,4-phenylenediamine, wherein the reacting of the p-phenylenediamine and the aldehyde or the ketone also forms the N,N'-dialkyl-1,4-phenylenediamine.

### DETAILED DESCRIPTION OF THE PREFERRED EMBODIMENTS

The present invention is generally related to a liquid composition comprising a substituted para-phenylenediamine and a substituted triazine. As used herein, the term "liquid'" means a composition that has a Brookfield viscosity at 100°C of less than 20,000 centipoise (cPs). The composition has a Brookfield viscosity at 100°C of from 10 to 20,000 cPs, e.g., from 100 to 10,000 cPs or from 200 to 5,000 cPs. Advantageously, the liquid compositions of the invention are not subject to sintering and still possesses desirable handling properties at a wide range of temperatures.

In one embodiment, the invention is to a liquid composition that preferably is suitable for use as anti-ozonants. The composition comprises a mixture of at least two compounds, specifically, a substituted para-phenylenediamine compound, preferably of structure (I): 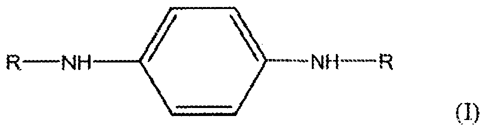 and a substituted triazine compound of structure (II):

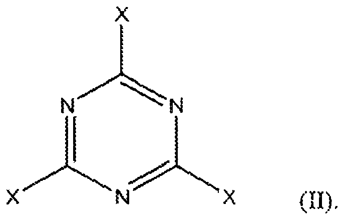

In one embodiment, X is the formula: 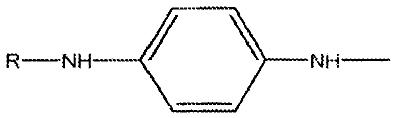 R is selected from the group consisting of linear or branched C₃-C₁₈ alkyl, unsubstituted or substituted C₃-C₁₈ cycloalkyl and unsubstituted or substituted C₆-C₁₈ aryl. Groups having at least six carbons are preferred for one or more of R₁, R₂, and R₃ over groups having five or fewer carbons.

Preferred alkyl groups for R, as well as those alkyl groups used throughout the application, include those with a secondary carbon in the alpha position to the nitrogen. In this configuration, without being bound to any theory, the antiozonant activity of the liquid composition is believed to be enhanced. Therefore, alkyl groups preferably are branched chain alkyl groups in which the alpha carbon is a secondary or tertiary carbon.

If R is an cycloalkyl or aryl group, the cycloakyl and aryl may be substituted with a linear or branched C₁-C₁₂ alkyl group. The cycloalkyl, aryl C₁-C₁₂ alkyl substituted cycloalkyl and C₁-C₁₂ alkyl substituted aryl provide such an alpha carbon configuration as well.

In one embodiment, R is selected from the group consisting of isopropyl, 1-sec-butyl, cyclohexyl, methyl-cyclohexyl, ethyl-cyclohexyl, propyl-cyclohexyl, 2,4-di-tert-butylcyclohexyl. 2-sec-butylcyclohexyl, phenyl, n-methylphenyl, naphthyl, n-methylnaphthyl, 1,2-dimethylbutyl, 1,3-dimethylbutyl, 1,4-dimethylpentyl, 1,3-dimethylpentyl, 1,5-dimethylhexyl, 1,4-, dimethylhexyl, 1,3-dimethylhexyl, 1-methylhexyl, 1-methylheptyl, 1,6-dimethyheptyl 1-methylheptyl, 1,7-dimethyloctyl, 1-methyloctyl, 1,8-dimethyltnonyl, 1-methylnonyl, 1,9-dimethyldecyl, 1-methyldecyl. 1,10-dimethylundecyl, 1,11-dimethyldolecyl, 1,12-dimethyltridecyl, 1,13-dimethyltetradecyl, 1,14-dimethylpentadecyl, 1,15-dimethylhexadecyl, 1-16-dimethylheptadecyl, and mixtures and isomers thereof, and the like.

Representative examples of alkyl groups for use herein for R and alkyl groups used throughout this application include, for example, a straight or branched hydrocarbon chain radical containing from 3 to 18 carbon atoms, e.g., iso-propyl, 1-sec-butyl, cyclohexyl, 1,2-dimethylbutyl, 1,3-dimethylbutyl, 1,4-dimethylpentyl, 1-methylhexyl, 1-methylheptyl, 1-methyloctyl, 1-methylnonyl, and 1-methyldecyl.

Representative examples of cycloalkyl groups for use herein for R and cycloalkyl groups used throughout this application include, for example, substituted or unsubstituted rings containing from 3 to 18 carbon atoms, e.g., cyclopentyl, cyclohexyl, n-methyl-cyclohexyl, n-dimethyl-cyclohexyl, n-ethyl-cyclohexy, cycloheptyl cyclooetyl, etc., mixtures and thereof, and the like.

Representative examples of aryl groups for use herein for R and aryl groups used throughout application include, for example, substituted or unsubstituted aromatic rings containing from 6 to 18 carbon atoms, e.g., phenyl, n-methylphenyl, n-dimethylphenyl, n-ethylphenyl, benzyl, naphthyl, tetrahydronapthyl, indenyl, diphenyl, etc., mixtures and isomers thereof and the like.

As indicated above, one or more of the R groups preferably are branched chain alkyl groups in which the alpha carbon to the amine group is a secondary carbon. For example, in one embodiment the liquid composition of the invention comprises a substituted paraphenylenediamine of structure (III): 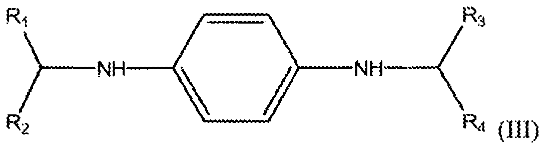 wherein R₁, R₂, R₃ and R₄ are independently selected from the group consisting of linear or branched C₁₋C₁₈ alkyl, unsubstituted or substituted C₃-C₁₈ cycloalkyl, and unsubstituted or substituted C₆-C₁₈ aryl. The cycloalkyl may be substituted with a C₁-C₁₂ linear or branched alkyl groups. In one embodiment, R₅ and R₇ are linear C₁-C₁₈ alkyl group and R₄ and R₆ are either a linear or branched C₁-C₁₈ alkyl group, an unsubstituted or substituted C₃-C₁₈ cycloalkyl, or unsubstituted or substituted C₆-C₁₈ aryl.

In another embodiment, the liquid composition of the invention comprises a substituted para-phenylenediamine of structure (IV): 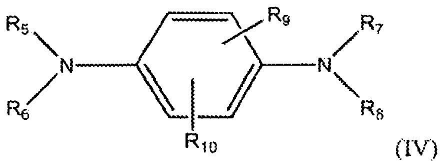 wherein R₆ is selected from the group consisting of linear or branched C₁₋C₁₈ alkyl, unsubstituted or substituted C₃₋C₁₈ cycloalkyl and unsubstituted or substituted C₆-C₁₈ aryl; R₈ is hydrogen, linear or branched C₁-C₁₁ alkyl group, C₃-C₆ cycloalkyl, phenyl or C₁-C₄ alkylated phenyl; R₉ and R₁₀ are independently hydrogen or linear or branched C₁₋C₈ alkyl group provided that at least one of R₉ and R₁₀ is not hydrogen; and R₅ and R₇ independently are hydrogen, phenol, or linear or branched C₁-C₁₁ alkyl group. In one embodiment, at least one of R₅, R₆, R₇, and R₈ is not hydrogen.

Suitable substituted p-phenylenediamines for inclusion in the liquid composition of the invention include, for example, N,N'-bis-(1,4-dimethylpentyl)-1,4-phenylenediamine, N,N'-bis-(N-isopropyl)-1,4-phenylenediamine, N,N'-bis-(N-cyclohexyl)-1,4-phenylenediamine, N,N'-bis-(N-sec-butyl)-1,4-phenylenediamine, N,N'-bis-(N-1,3-dimethylbutyl)-1,4-phenylenediamine, N,N'-bis-(N-1-methylheptyl)-1,4-phenylenediamine, N,N'-bis-(2,4-di-tert-butylcyclohexyl)-1,4-phenylenediamine, N,N'-bis-(N-2-sec-butylcyclohexyl)-1,4-phenylenediamine, and N,N'-bis-(1-methyldecyl)-1,4-phenylenediamine. In one embodiment, the p-phenylenediamine comprises Flexzone™ 4L manufactured by Chemtura Corp. of Middlebury, Connecticut, USA.

As indicated above, in some embodiments, the liquid composition of the invention comprises a substituted triazine of formula (II), above, wherein X is of the formula: 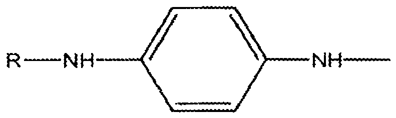 wherein R is as defined above. In another embodiment, X is of the formula: 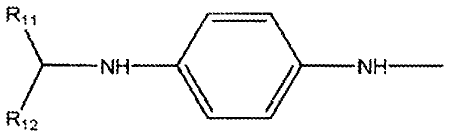 wherein R₁₁ and R₁₂ are independently selected from the group consisting of linear or branched C₁-C₁₈ alkyl, unsubstituted or substituted C₃-C₁₈ cycloalkyl, and unsubstituted or substituted C₆-C₁₈ aryl. The cycloalkyl may be substituted with a C₁-C₁₂ linear or branched alkyl groups. In one embodiment, R₁₁ is a linear C₁-C₁₈ alkyl group and R₁₂ is either a linear or branched C₁-C₁₈ alkyl group, an unsubstituted or substituted C₃-C₁₈ cycloalkyl, or unsubstituted or substituted C₆-C₁₈ aryl.

In another embodiment, X is of the formula: 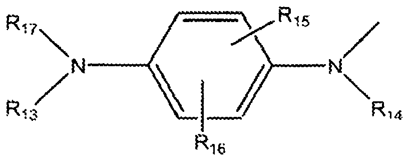 wherein R₁₃ is defined above as linear or branched C₃-C₁₈ alkyl, unsubstituted or substituted C₃-C₁₈ cycloalkyl and unsubstituted or substituted C₆-C₁₈ aryl, R₁₄ is hydrogen, linear or branched C₁-C₁₁ alkyl group, C₃-C₆ cycloalkyl, phenyl or C₁-C₄ alkylated phenyl, R₁₅ and R₁₆ are independently hydrogen or linear or branched C₁-C₈ alkyl group provided that at least one of R₁₅ and R₁₆ is not hydrogen; and R₁₇ is hydrogen, phenyl, or linear or branched C₁-C₁₁ alkyl group. In one embodiment, at least one of R₁₃, R₁₄, or R₁₇ is not hydrogen.

In other embodiments, X is selected from the group consisting of C₁-C₆ alkyl; thiol; thioalkyl; hydroxy; alkoxy; chloro; phenoxy; acyl; morpholinyl; piperdyl; N-N'dialkyldithiocarbamyl; benzothiazolylthio; benzimidazolylthio; anilino; thiazolidylthio: imidazolidylthio; oxazolidylthio; imidazolidylamino; oxazolidylamino; 4-hydroxyanilino; 3,5-dialkyl-4 hydroxyanilino; dialkylamino; 2,5-dialkyl,4 hydroxyphenoxy; 3,5-dialkylhydroxyphenoxy; and 3,5-dialkylhydroxyphenylpropionyl.

In some embodiments, the liquid composition of the invention comprises a substituted triazine compound of structure (V): 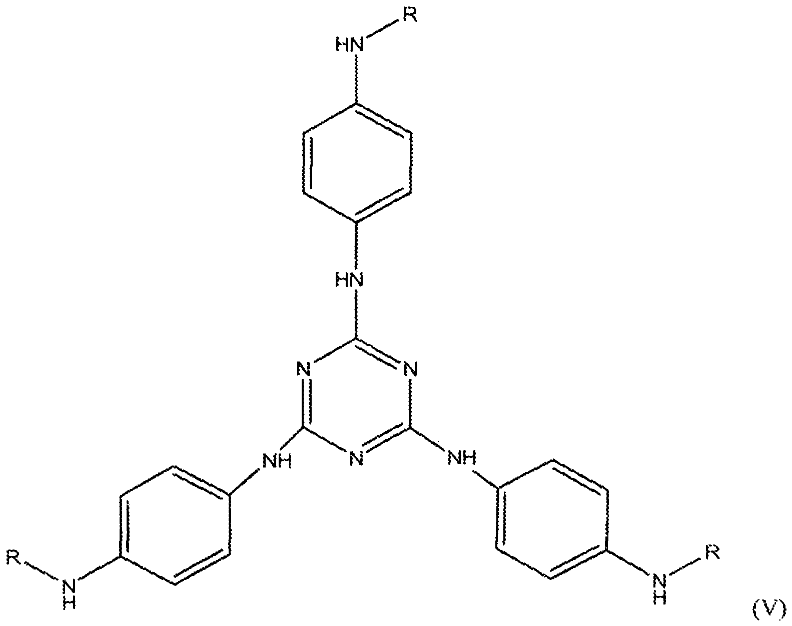 wherein R is defined above.

Suitable substituted triazines of structures (II) and (V) include, for example, 2,4,6-tris(N-1,4-dimethylpentyl-p-phenylenediamino)-1,3,5-triazine; 2,4,6-tris(N-isopropyl-p-phenylenediamino)-1,3,5-triazine; 2,4,6-tris(N-cyclohexyl-p-phenylenediamino)-1,3,5-triazine; 2,4,6-tris(N-sec-butyl-p-phenylenediamino)- 1,3,5-(triazine; 2,4,6-tris(N-1,3-dimethylbutyl-p-phenylenediamino)-1,3,5-triazine; 2,4,6-tris(N-1-methylheptyl-p-phenylenediamino)-1,3,5-triazine; 2,4,6-tris(N-2,4-di-tert-butylcyclohexyl-p-phenylenediamino)-1,3,5-triazine; 2,4,6-tris(N-2-sec-butylcyclohexyl-p-phenylenediamino)-1,3,5-triazine; 2,4,6-tris(1-methyldecyl-p-phenylenediamine)-1,3,-5-triazine, 2,4,6-tris(N-1,4-dimethylpentyl-2-methyl-p-phenylenediamino)-1,3,5-triazine: 2,4,6-tris(N-1,4-dimethylpentyl-2-ethyl-p-phenylenediamino)-1,3,5-triazine; 2,4,6-tris(N-isopropyl-2-ethyl-p-phenylenediamino)-1,3,5-triazine; 2,4,6-tris(N-isopropyl-2-methyl-p-phenylenediamino)1,3,5-triazine; 2,4,6-tris[N,N'-bis(isopropyl)-p-phenylenediamino]-1,3,5-triazine; 2,4,6-tris[N,N'-bis(1,4-dimethylpentyl)-p-phenylenediamino]-1,3,5-triazine; 2;4,6-tris(N'-2-isopropylphenyl-p-phenylenediamino)-1,3,5-triazine; 2-(N-1,4-dimethylpentyl-p-phenylenediamino)-4,6-bismercapto-1,3,5-triazine; 1,6-bis[2-imino-4,6-bis(N-1,4-dimethylpentyl-p-phenylenediamino)-1,3,5-triazino] hexane; 1,6-bis[2-imino-4,6-bis(N-phenyl-p-phenylenediamino)-1,3,5-triazino] hexane; N,N'-bis[4,6-bis(N-1,4dimethylpentyl-p-phenylenediamino-1,3,5-triazinyl-2)]p-phenylenediamine; and N-1,4-dimethylpentyl-N,N'-bis[4,6-bis(N-1,4-dimethylpentyl-p-phenylenediamino-1,3,5-triazinyl-2)]p-phenylenediamine. Other suitable triazines may include those described in U.S. Patent Nos. 4,794,134, 4,794,135, 4.946,881, 4,956,405, 4,972,010, 5,047,530, 5,068,271, 5,118,807, 5,120,779, 5,120,844, 5,126,38.5, 5,208,280 and 5,990,310, the entire contents and disclosures of which are incorporated herein by reference. A preferred triazine for inclusion in the liquid compositions of the invention is 2,4,6-tris(N-1,4-dimethylpentyl-p-phenylenediamino)-1,3,5-triazine. In one embodiment, the triazine comprises Durazone™ 37 manufactured by Chemtura Corp.

In various embodiments of the present invention the substituted paraphenylenediamine and substituted triazine compounds may be selected from any of the structures shown above. In one exemplary embodiment the substituted para-phenylenediamine and substituted triazine are each substituted with a similar substituent. For example, a similar substituent may include isomers of a hydrocarbyl group where the difference in the number of carbon atoms is less than 4, e.g. less than 2 or is 0. Such similar substituents may result from the use of the same starting materials used to make both the substituted para-phenylenediamine and substituted triazine that comprise the liquid compositions of the present invention.

In one embodiment, the liquid composition of the invention comprises a substituted para-phenylenediamine of structure (VI): 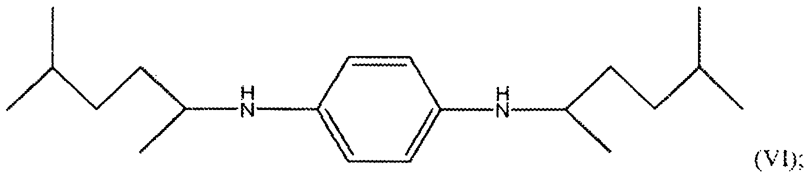 and a substituted triazine of structure (VII):

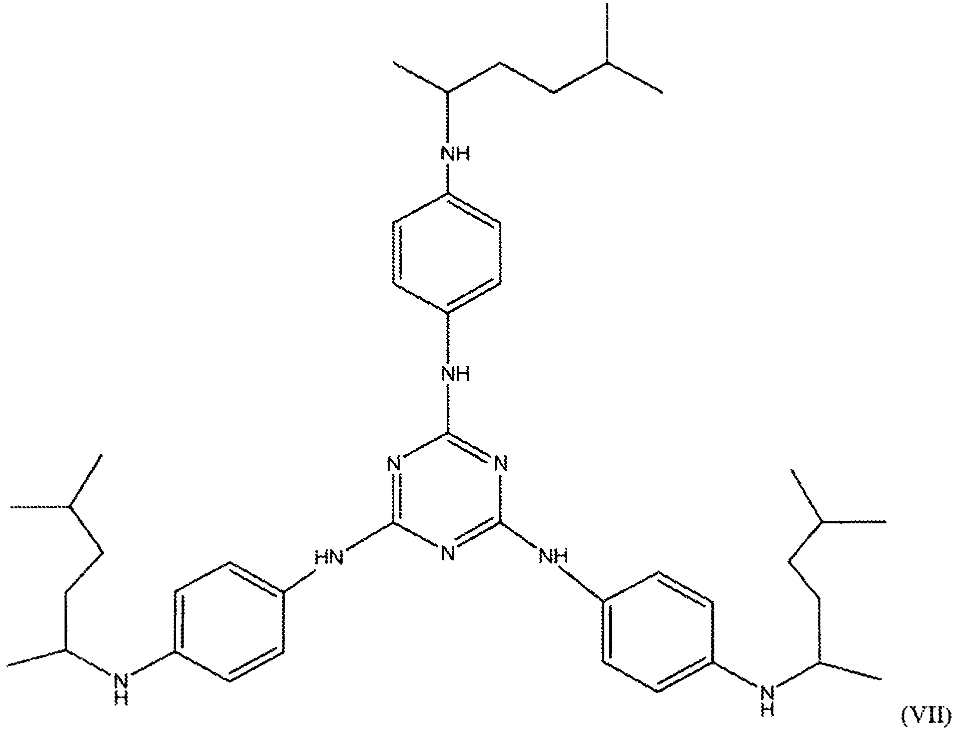

The relative amounts of the substituted triazine component and the substituted parapheneylenediamine component in the liquid compositions of the invention may vary widely. In some preferred embodiments, the liquid composition comprises the substituted paraphenylenediamine in an amount greater than 15 weight percent (wt. %), e.g., greater than 25 wt. %, greater than 50 wt. %, or greater than 70 wt, %, based on the total weight of the liquid composition. In terms of ranges, the liquid composition optionally comprises the substituted para-phenylenediamine in an amount ranging from 15 to 75 wt. %, e.g., from 20 to 65 wt. %, or from 40 to 60 wt. %, based on the total weight of the liquid composition.

In some preferred embodiments, the liquid composition comprises the substituted triazine in an amount greater than 15 wt. %, e.g., greater than 25 wt. %, greater than 50 wt. %, or greater than 70 wt. %, based on the total weight of the liquid composition. In terms of ranges, the liquid composition optionally comprises the substituted triazine in an amount ranging from 15 to 75 wt. %, e.g., from 20 to 65 wit. %, or from 35 to 65 wt. %, based on the total weight of the liquid composition.

the relative amounts of substituted para-phenylenediamine contained in the liquid composition relative to triazine may vary but should be such that the composition of the invention is a liquid at room temperature, i.e., has a Brookfield viscosity less than 1,000 cPs at 100°C. Preferably, the weight ratio of substituted triazine to substituted para-phenylenediamine is from 0.67:1 to 3:1, e.g. from 1:1 to 2.3:1. The substituted para-phenylenediamine may be residual para-phenylenediamine meaning that substituted para-phenylenediamine remains in the composition after formation of the substituted triazine, as described in greater detail below.

The compounds of the present invention are advantageously synthesized by the following general method. Although the reagents may be added in a different order as shown in some of the examples, the preferred method generally involves alkylating a PPDA, i.e. unsubstituted para-phenylenediamine, with an aldehyde or ketone to form mono-PPDA, i.e. mono-alkylated para-phenylenediamine and di-PPDA, i.e. di-alkylated para-phenylenediamine. The mono-PPDA is then reacted with tri-halo triazine to form a triazine intermediate and a conjugate acid, e.g., HCl. According to one embodiment of the invention, the mono-PPDA is reacted with the tri-halo triazine in the presence of the di-PPDA. The substituted triazine intermediate is then neutralized, e.g., with base or soda ash, to form the compositions of the present invention that comprise the substituted triazine and the substituted paraphenylenediamine, i.e. di-PPDA. The general scheme is provided below. As shown in the general scheme, di-PPDA, once form remains in present throughout the reaction steps and is not separated out. 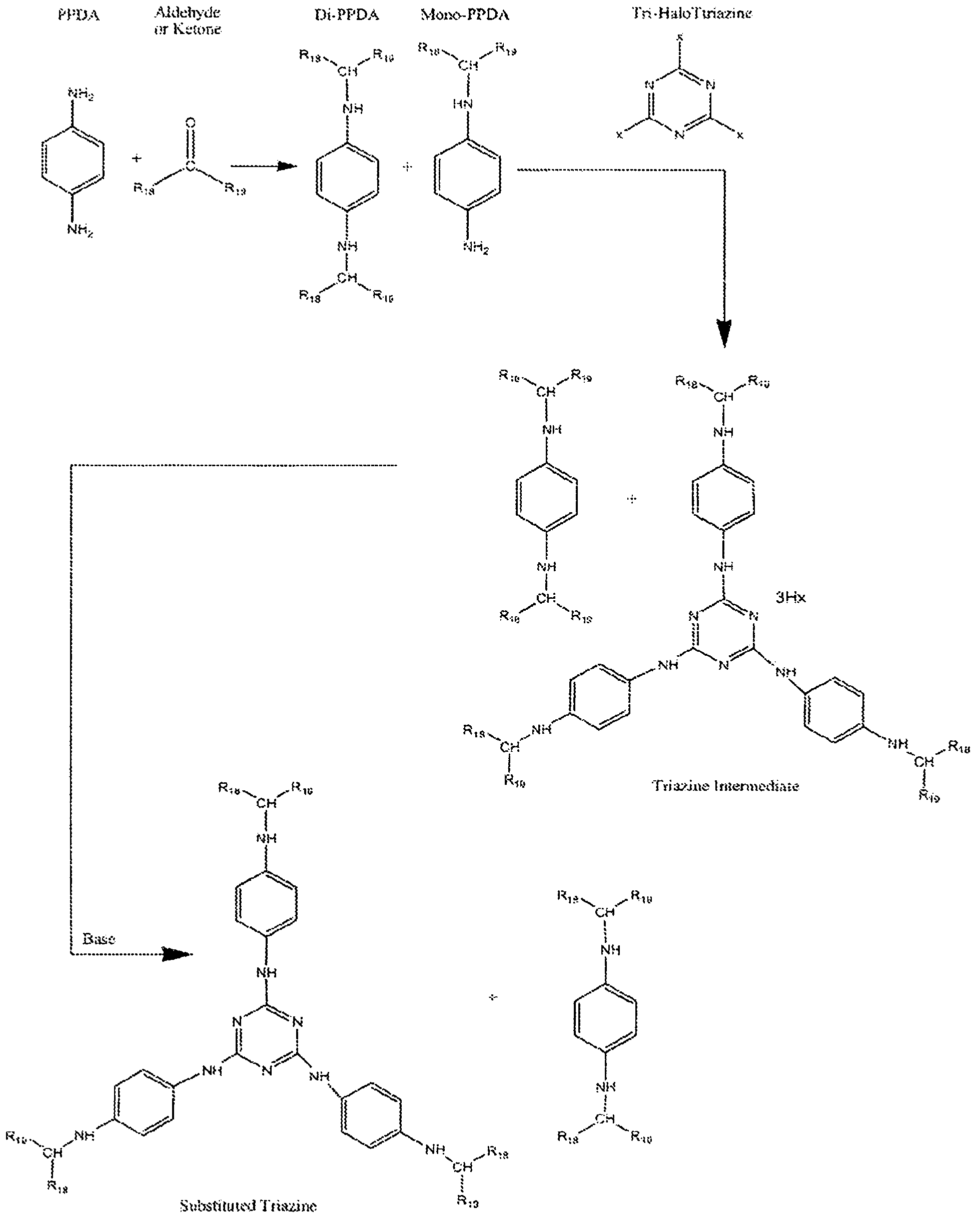 wherein R₁₈ and R₁₉ are independently selected from hydrogen, linear or branched C₃-C₁₈ alkyl. unsubstituted or substituted C₃-C₁₈ cycloalkyl and unsubstituted or substituted C₆-C₁₈ aryl; and x is a halide selected from the group consisting of F, Cl, Br, or I. The cycloalkyl and aryl may be substituted with a linear or branched C₁-C₁₂ alkyl groups. It is noted here that any use of the term '"alkyl", in the context of a starting materials (e.g., mono-PPDA or di-PPDA) or the final substituted triazine compounds, includes cycloalkyl, aryl, alkyl substituted cycloalkyl and alkyl substituted aryl structures as well.

Initially, PPDA is alkylated using an aldehyde or ketone. Suitable PPDAs for this reaction may include substituted or unsuitable paraphenylenediamines. Suitable aldehydes or ketones include C₃-C₁₈ linear or branched chain aldehydes or ketones, and may include one or more cycloalkyls or aryl groups. In one embodiment, ketones are preferred because the secondary carbon of the carbonyl group readily bonds to the amine groups of the paraphenylenediamine. One suitable ketone includes methylisoamylketone (MIAK), methylisobutylketone (MIBK), 2-octanone, or methylethylketone.

The alkylation reaction preferably occurs in the presence of a catalyst. The catalyst is preferably a metal of Groups 10 and 11 of the Periodic Table of the Elements, and more preferably, a noble metal such as platinum or palladium. In one embodiment the catalyst comprises a supported catalyst, e.g., a catalyst supported on substrate particles, e.g., carbon, alumina, silica, aluminosilicates, etc.

The alkylation preferably is carried out in the presence of hydrogen at temperature of, for example, 50-200°C, 100°C-130°C, e.g., from 115°C to 125°C, and at a pressure of less than 5,000 psi (34.5 MPa), e.g., less than 1000 psi (6.9 MPa), less than 500 psi (3.4 MPa), or less than 250 psi (1.7 MPa). In terms of ranges, the pressure optionally is from 150-250 psi (1.03-1.7 MPa), e.g., 150-200 psi (1.03-1.4 MPa).

In other embodiments the PPDA may be alkylated using a reductive alkylation process, such as those described in Abdel-Majid, A. F. et al., 61 J. ORG. CHEM. 3849-62 (1996), the entire contents and disclosure of which is hereby incorporated by reference. The reductive alkylation processes may, for example, use an aldehyde or ketone and sodium triacetoxyborohydride (STAB-H) which is reacted with the PPDA. Other hydride reducing agents may be used, such as sodium-cyanoborohydride, borane-pyridine, Ti(OiPr)₄/NaBH₃CN, Zn/AcOH, NaBH₄/Mg(ClO₄)₂, Zn(BH₄)₂/ZnCl₂ and borohyride exchange resins. The reductive alkylation process is carried out in the presence of a solvent such as, for example, 1,2-dichloroethane, tertahydrofuran, or acetonitrile. In addition, a catalyst solution of acetic acid may be used with ketones.

Such a reaction using PPDA provides a mixture of products that includes mono-PPDA, di-PPDA, and unreacted PPDA. In one embodiment, the mixture of products comprises mono-PPDA in an amount from 40 to 75 wt. %, e.g., from 45 to 60 wt. % or from 49 to 55 wt. %; di-PPDA in an amount from 40 to 75 wt. %, from 45 to 60 wt. % or from 49 io 55 wt. %; and unreacted PPDA in an amount from 0 to 10 wt. %, from 0 to 5 wt. % or from 0 to 2 wt. %, based on the total weight of the three compounds in the product mixture. The processes of this embodiment of the present invention are advantageous in that no separate step is necessary for removing the di-PPDA from the product mixture. Conventional process sought to remove di-PPDA because this was considered to be a contaminant that adversely affected the performance of substituted triazine. Di-PPDA is known to discolor, even in a small amount, and causes staining. Thus, the conventional process removed the di-PPDA to avoid staining the final product. However, it has now surprisingly and unexpectedly been discovered that maintaining residual di-PPDA in the product mixture throughout the subsequent process does not significantly reduce the performance of the antiozonant activity of the composition or hinder the formation of the desired substituted triazine compound. The amount of residual di-PPDA should be greater than 1%, because the composition exhibits sintering when residual di-PPDA is less than 1%. Thus, excess residual di-PPDA is maintained in compositions of the present invention to keep the composition a liquid.

In a preferred embodiment, the subsequently formed substituted triazine intermediate is not separated from the di-PPDA and di-PPDA remains in the composition. In addition, residual PPDA and mono-PPDA may also remain in the composition. Thus, there is no removal of the substituted triazine intermediate using filtration or vacuum fractional distillation as is common in prior methods. Such embodied methods are cost-effective and more productive because the additional removal step is advantageously avoided.

In still other embodiments, the mono-PPDA and di-PPDA may be prepared separately by methods known to those skilled in the art. The separate compounds may be mixed to achieve desired weight ratios described above.

Next, the mono-PPDA is reacted in excess with a tri-halo triazine in a nitrogen, argon or similarly inert environment. The tri-halo triazine may be cyanuric chloride, cyanuric fluoride, cyanuric bromide, or cyanuric iodine. In particular 2,4,6-tri-halogeno-1,3,5-triazine, such as cyanuric chloride, is a suitable tri-halo triazine. In one embodiment, the molar ratio of N-alkyl-p-phenylenediamine to tri-halo triazine is from 2.5:1 to 5.0:1, e.g. 2.8:1 to 4.0:1 or about 3.0:1. In addition, a suitable C₁-C₈ alcohol or C₁-C₈ alkane solvent such as isopropanol, hexanol, heptane, and octanol may be employed. In addition, the reaction may occur in the presence of di-PPDA, which may act as a solvent. Preferably the di-PPDA is the residual product from the above-described first process.

Temperature control of the reaction between the mono-PPDA and tri-halo triazine is of some importance. It is critical that the tri-halo triazine is added in small portions to mono-PPDA mixture in a solvent at low temperature. It is preferred that this reaction takes place below 30°C, e.g., below 25°C or below 22°C. The addition of tri-halo triazine to the mono-PPDA results in an exothermic reaction which increases the temperature and may result in impurities and undesirable byproducts if the temperature increases too much. Also the reaction of tri-halo triazine with mono-PPDA loses regioselectivity at temperature above 23°C, resulting in byproduct formation, excess consumption of tri-halo triazine and difficulty in establishing the proper stoichiometry. Preferably, the tri-halo triazine and the mixture of mono-PPDA, di-PPDA, and unreacted PPDA if present, are slowly brought into contact and, optionally dropwise, such that the temperature of the reaction mixture does not exceed 25°C. The temperature of the reaction between the tri-halo triazine and mono-PPDA may be cooled, and optionally repeatedly cooled between additions if necessary. For example, in one embodiment the temperature of reaction is allowed to rise up to 20°C and cooled by 5-15°C, e.g., 10-12°C, between additions of tri-halo triazine. Once the tri-halo triazine has been completely added to the mono-PPDA, or vice versa, the reaction mixture preferably is heated by at least 20°C, at least 40°C or at least 60°C to complete the displacement of the halogen atoms. Again, heating the reaction mixture too high may result in impurities and byproducts. The reaction mixture preferably is held at from 60 to 80°C, e.g., from 65 to 75 or from 69 to 72°C, preferably for from 3 to 6 hours, e.g., from 4 to 5 hours, in order to complete the displacement. Without being bound by theory, it is believed that the first two halogen atoms from the tri-halo triazine are rapidly displaced when the tri-halo triazine is added to mono-PPDA, or vice versa. The third halogen atom is believed to be displaced more slowly. Thus, heating the reaction mixture is desirable to facilitate displacement of the third halogen atom. Selection of the optimal temperatures are, of course, dependent upon the identity of the starting PPDA and solvent which is chosen.

In conventional processes the substituted triazine intermediate is separated from the reaction mixture following the reaction of mono-PPDA and tri-halo triazine using filtration or vacuum fraction distillation. In embodiments of the present invention, the substituted triazine intermediate is not separated, but remains in the reaction mixture, which also may comprise di-PPDA.

At this stage the substituted triazine intermediate may not be a liquid and may not even be stirrable at temperatures of 80°C.

Finally, the substituted triazine intermediate is neutralized, for example, with aqueous base such as sodium hydroxide or soda ash. Similar to the second process the third process may use a suitable C₁-C₈ alcohol or C₁-C₈ alkane solvent such as isopropanol, hexanol, heptane or octanol. In addition, the reaction may occur in the presence of di-PPDA. In one embodiment, the amount of di-PPDA present may be from 15 to 60 wt. %, e.g. from 20 to 50 wt. % or from 20 to 35 wt. %. Preferably the di-PPDA is residual from the first and second processes.

Once neutralized, the substituted triazine and the di-PPDA is removed and washed, repeatedly if necessary, to remove any remaining salts or caustic agents. Next the solvent is removed using a vacuum filtration, for example, at 10 mm (0.001 MPa) and 60°C for about 2 hours.

Optionally, additional di-PPDA may be added to the composition of the substituted triazine and the di-PPDA, such that the total amount of substituted triazine is from 40 to 75 wt. %, e.g. 50 to 70 wt. % or e.g. 60 to 70 wt. %, of the total composition. In one embodiment, the weight percent of substituted triazine is greater that 75 wt. %, e.g. greater than 65 wt. % or greater than 55 wt. %, prior to adding additional di-PPDA.

Such compositions may be added to articles containing elastomers, including by not limited to rubbers, unsaturated elastomers and unsaturated polymers as described below. Compositions of the present invention may be added to articles to make those articles ozone resistant. In addition, compositions of the present invention may be used as a friction modifier without a lubricating oil.

When antiozonant compositions of the present invention are used to protect unsaturated elastomers, such as rubber or unsaturated polymers, 0.1 to 3.0 parts of the substituted triazine compositions of the present invention, e.g. 1.0 to 2.0 parts, per 100 parts of the elastomer may be used. In such embodiments, the weight ratio the substituted triazine compositions to the unsaturated elastomer is from 0.1:100 to 3.0:100, e.g. from 1.0:100 to 2.0:100.

Representative of the elastomer which may be employed in the articles in accordance with embodiments of the present invention are diene elastomers and natural rubbers. Such elastomers will typically possess an iodine number of between about 100 and about 400, although highly unsaturated rubbers having a higher or a lower (i.e., of 50-100) iodine number may also be employed. Illustrative of the diene elastomer which may be utilized are polymers based on conjugated dienes such as 1,3-butadiene: 2-methyl-1,3-butadiene: 1,3-pentadiene: 2,3-dimethyl-1,3-butadiene; and the like, as well as copolymers of such conjugated dienes with monomers such as styrene, alpha-methylstyrene, acrylonitrile, methacrylonitrile, methyl acrylate, ethyl acrylate, methyl methacrylate, ethyl methacrylate, vinyl acetate and the like. Preferred highly unsaturated rubbers include natural rubber, cis-polyisoprene, polybutadiene, poly(styrenebutadiene), polychloroprene and poly(acrylonitrile-butadiene). Suitable natural rubbers include Standard Malaysian Rubber (SMR) 5CV. Suitable polybutadiene include Cisdene™ 1203 from American Synthetic Rubber. Moreover, mixtures of two or more highly unsaturated rubbers may also be employed. Also, mixtures of the highly unsaturated rubbers with elastomers having lesser unsaturation (iodine number between 10-100) such as EPDM, EPR, butyl or halogenated butyl rubbers are also very useful in articles of the invention.

The exterior surfaces of the articles are the areas subject to ozone degradation and therefore, it is most advantageous to utilize the compounds in the exterior elastomeric layers of the article that are exposed to the environment. The types of elastomeric articles in which the invention is most useful are those subject to severe dynamic flexing during the periods of ozone exposure. Articles such as conveyor belts, tires, power transmission belts, hoses, fluid springs, roofing membranes, brushings, expansion joints, vibration drawers, wire and cable jacketing.

U.S. Patent No. 4,645,793 discloses particularly preferred high molecular weight EPDM polymers of this high molecular weight class that have an ethylene:propylene weight ratio of about 50:50 to about 75:25, preferably from 60-40 to about 75:25 and at least about 6 wt. % and preferably at least about 7.5 wt. %, most preferably at least about 9 wt. % and up to about 15 wt. % bound non-conjugated diene based on the total EPDM. Suitable such non-conjugated dienes include straight chain and cyclic dienes such as 1,4-hexadiene, ethylidene norbornene, norbornadiene, methylene norbornene, dicyclopentadiene, 2-methyl norbornadiene, 5-vinyl 2 norbornene and the like. Especially preferred among such dienes is ethylidene norbornene. Preferably, the EPDM has a nonconjugated diene content of 7.5-15 weight percent. Methods for production of such EPDM polymers are well documented in the art. Preferably the amount of EPDM polymer in the elastomeric composition is from 15 to about 40 parts by weight per 100 parts by weight of total elastomers.

For ease and efficiency of mixing the polymers, the high molecular weight EPDM polymer is provided as an oil extended polymer prior to mixing with the other polymers. The EPDM may be oil extended by the well-known procedures of oil extending polymers by adding oil to the polymer solution from the polymerization reactors and recovering the oil extended polymer; the oil is selected from the napthenic or paraffinic oils, in amounts from about 50 to about 150 parts by weight of oil per 100 parts by weight or EPDM polymer. Alternatively, the oil can all be separately added to the high molecular weight EPDM polymer during the process of mixing of the polymers.

The ethylene-propylene elastomer which is of preferred use is an ethylene-propylene-diene terpolymer containing a small portion of a diene selected generally from among ethylidene norbornene, hexadiene-1,4, or, more exceptionally, from among methylene norbornene, dicyclopentadiene, and cyclo-octadiene-1,5. It is particularly surprising that it is advantageous to covulcanize with peroxides and ethylene-propylene-diene terpolymer into which a diene has been introduced to facilitate a sulfur vulcanization.

The amount of elastomer of the ethylene-propylene type to be used is between about 15 percent and about 60 percent by weight of the total elastomers, the balance being formed of ordinary highly unsaturated diene-based elastomers. A smaller amount--about 20 percent to about 30 percent by weight constitutes the preferable range--can be used with a terpolymer having a high content of macromolecules of high molecular weight, that is to say a terpolymer having a Mooney plasticity M/L (1+8') of more than about 100 at 100°C. The best proportion is between about 30 percent and about 40 percent by weight for an ordinary terpolymer containing a relatively large number of macromolecules of relatively low molecular weight, that is to say, having a Mooney plasticity of between about 50 and about 100 at 100°C. The use of an ethylene-propylene copolymer requires a higher proportion for the same effectiveness. However, one can use such a copolymer possibly mixed with a terpolymer.

The curative system employed when blends of highly unsaturated and lesser unsaturation rubbers are utilized is critical to good physical properties. This preferred system comprises a sulfur containing cure component selected from sulfur or a sulfur donor compound, at least one sulfur cure accelerator and at least one organic peroxide curative.

The sulfur donor compounds which may be employed in conjunction with or in the alternative to sulfur are well known to those skilled in the art of rubber compounding. Illustrative of such sulfur donor compounds are 2-(4-morpholinyldithio)benzothiazole, tetramethylthiuram disulfide, tetraethylthiuram disulfide, dipentamethylene thiuram hexasulfide, N,N'-caprolactam disulfide and the like.

The sulfur cure accelerators which may be employed include thioureas, such as N,N'-dibutylthiourea, 2-mercaptoimidazoline, tetramethylthiourea and the like; guanidine derivatives, such as N,N'-diphenylguanidine and the like; xanthates, such as zinc dibutylxanthate and the like; dithiocarbamates, such as zinc dimethyldithiocarbamate, zinc diethyldithiocarbamate, zinc dibutyldithiocarbamate, sodium diethyldithiocarbamate, and the like; thiuramsulfides, such as dipentamethylenethiuram disulfide, dipentamethylenethiuram hexasulfide, tetrabutylthiuram monosulfide, tetramethylthiuram monosulfide, tetraethylthiuram monosulfide, tetraethylthiuram disulfide and the like; heterocyclics, such as mercaptobenzimidazole, mercaptobenzthiazole, 2,2'-dibenzothiazyl disulfide, zinc 2-mercaptobenzothiazole and the like: and sulfenamides, such as N-oxydiethylene-2-benzothiazolesulfenamide, N-t-butylbenzothiazylsulfenamide, N-cyclohexyl2-benzothiazylsulfenamide, N,N'-diisopropyl-2-benzothiazylsulfenamide and the like. Suitable zinc oxides used as sulfur cure accelerators include Kadox™ 911 made by the Zinc Corporation of America. Moreover, mixtures of two or more sulfur cure accelerators may be employed in the curing the preferred accelerators are thiazoles and sulfenamides, with sulfenamides being particularly preferred.

The peroxides which may be employed in this invention have an activation temperature which is below the decomposition temperature of the rubbers employed. Illustrative of such peroxides are benzoyl peroxide, dibenzoyl peroxide, 1,3-bis(t-butylperoxyisopropyl)benzene, diacetyl peroxide, butyl 4,4-bis(t-butylperoxy)valerate, p-chlorobenzoyl peroxide, cumene hydroperoxide, t-butyl cumyl peroxide, t-butyl perbenzoate, dit-butyl peroxide, dicumyl peroxide. 2,5-dimethyl-2,5-di-t-butylperoxyhexane, 2,5-dimethyl-2,5-di-t-butyl-peroxyhex-3-yne, 4-methyl-2,2-di-t-butylperoxypentane and the like. Mixtures of two or more peroxides may also be employed. The preferred peroxides are dicumyl peroxide and 2,5-dimethyl-2,5-di-butylperoxyhexane.

The other antiozonant which may be utilized include any of the commonly recognized paraphenylerlediannine class of materials: N-phenyl-N'-(1,3-dimethylbutyl)-p-phenylenediamine; N-phenyl-N'-isopropyl-p-phenylenediamine; N-phenyl-N'-(1-methylheptyl)-p-phenylenediamine; N-phenyl-N'-cyclohexyl-p-phenylenediamine; mixed diaryl-p-phenylenedialmines; N-N'-diphenyl-p-phenylenediamine; N,N'-di-beta-naphthyl-p-phenylenediamine; N,N'-bis(1,4-dimethylpentyl)-p-phenylenediamine; N,N'-bis(1-ethyl-3-methylpentyl)-p-phenylenediamine; N,N'-bis(1-methyleptyl)-p-phenylenediamine; N-phenyl-N'-p-toluenesulfonyl-p-phenylediamine N-phenyl-N'-alkyl-p-phenylenediamine; 6-ethoxy-1,2-dihydro-2,2,4-trimethylquinoline; and nickel dibutyl dithiocarbamate.

A most preferred antiozonant to be used in combination with the composition of the present invention is N-.phenyl-N'-(1,3-dimethylbutyl)-p-phenylenediamine.

The highly unsaturated polymers to be protected may be fomulated in conventional manner with the many usual compounding ingredients, for example, vulcanizing agents. accelerators, activators, retarders, antioxidants, plasticizers, softener, fillers, reinforcing pigments and carbon blacks. Suitable plasticizers or tillers may include Circosol™ 4240 made by Sun Oil Company, or CalSol™ 8240 made by Calumet Lubricants. Suitable softeners include stearic acid. Exemplary stearic acid include Stearic acid T-22 produced by Monson Chemical and EMERY™ stearic acids from Cognis Oleochemicals. Suitable carbon blacks include N-326, N-339, N-550, -N-650, and N-660. Exemplary carbon black include those produced by Continental Carbon Company. Suitable microcrystalline waxes include Sunproof™ Improved made by Chemtura Corp.

In one embodiment a suitable ozone resistant article comprises diene elastomer in an amount from 40 to 90 wt.%, e.g. 50 to 85 wt.% or 60 to 75 wt.%. Additional components, ifs present:, may include one or more of the following: curative system in an amount from 2.5 to 25 5 wt.%, e.g. 10 to 25 wt.% or 15 to 20 wt %, peroxides in an amount from 2.5 to 25 wt.%, e.g. 10 to 25 wt, % or 15 to 20 wt.%, vulcanizing agents in an amount from 2.5 to 25 wt.%, e.g. 10 to 25 wt. % or 15 to 20 wt. %, activators in an amount from 0.5 to 10 wt. %, e.g. 1 to 5 wt.% or 2 to 5 wt. %, retarders in an amount from 0.5 to 10 wt. %, e.g. 1 to 5 wt. % or 2 to 5 wt. %, antioxidants in an amount from 0.1 to 10 wt. %, e.g. 0.5 to 5 wt. % or 1 to 5 wt. % plasticizer in an amount from 0,1 to 10 wt. %, e.g. 0.5 to 5 wt. % or 1 to 5 wt. %, softeners in an amount from 0.1 to 10 wt. %, e.g. 0.5 to 5 wt. % or 1 to 5 wt. %, fillers in an amount from 0.1 to 10 wt. %, e.g. 0.5 to 5 wt. % or 1 to 5 wt. %, reinforcing pigments in an amount from 0.1 to 10 wt. %, e.g. 0.5 to 5 wt. % or 1 to 5 wt. %, carbon blacks in an amount from 0.1 to 10 wt. %, e.g. 0.5 to 5 wt. % or 1 to 5 wt. %, microcrystalline waxes in an amount from 0,1 to 5 wt. %. e.g. 0.5 to 3 wt. % or 1 to 2 wt. % and antiozonants in an amount from 0.05 to 5 wt. %, e.g. 0.1 to 4 wt. % or 0.5 to 3 wt. %.

In one embodiment a suitable ozone resistance article comprises natural rubbers in an amount from 40 to 90 wt. %, e.g. 50 to 85 wt. % or 60 to 75 wt. %. Additional components, if present, may include one or more of the following: curative system in an amount from 2.5 to 25 wt. %, e.g. 10 to 25 wt. % or 15 to 20 wt. %, peroxides in an amount from 2.5 to 25 wt. %, e.g. 10 to 25 wt. % or 15 to 20 wt. %, vulcanizing agents in an amount from 2.5 to 25 wt. %, e.g. 10 to 25 wt. % or 15 to 20 wt. %, activators in an amount from 0.5 to 10 wt. %, e.g. 1 to 5 wt. % or 2 to 5 wt. %, retarders in an amount from 0.5 to 10 wt. %, e.g. 1 to 5 wt. % or 2 to 5 wt. %, antioxidants in an amount from 0.1 to 10 wt. %, e.g. 0.5 to 5 wt. % or 1 to 5 wt. %, plasticizers in an amount from 0,1 to 10 wt. %, e.g. 0.5 to 5 wt. % or 1 to 5 wt. %, softeners in an amount from 0.1 to 10 wt. %, e.g. 0.5 to 5 wt. % or 1 to 5 wt. %, fillers in an amount from 0.1 to 10 wt. %, e.g. 0.5 to 5 wt. % or 1 to 5 wt. %, reinforcing pigments in an amount from 0.1 to 10 wt. %, e.g. 0.5 to 5 wt. % or 1 to 5 wt. %, carbon blacks in an amount from 0.1 to 10 wt. %. e.g. 0,5 to 5 wt. % or 1 to 5 wt. %, microcrystalline waxes in an amount from 0.1 to 5 wt. %, e.g. 0.5 to 3 wt. % or 1 to 2 wt. % and antioxonants in an amount from 0.05 to 5 wt. %, e.g. 0.1 to 4 wt. % or 0.5 to 3 wt. %.

In one embodiment a suitable ozone resistance article comprises a blend of two natural rubbers, each of the natural rubbers in an amount from 40 to 90 wt. %, e.g. 50 to 85 wt. % or 60 to 75 wt. %. Additional components, if present, may include one or more of the following: curative system in an amount from 2.5 to 25 wt. %, e.g. 10 to 25 wt. % or 15 to 20 wt. %, peroxides in an amount from 2.5 to 25 wt. %, e.g. 10 to 25 wt. % or 15 to 20 wt. %, vulcanizing agents in an amount from 2.5 to 25 wt. %, e,g. 10 to 25 wt. % or 15 to 20 wt. %, activators in an amount from 0.5 to 10 wt. %, e.g. 1 to 5 wt. % or 2 to 5 wt. %, retarders in an amount from 0.5 to 10 wt. %, e.g. 1 to 5 wt. % or 2 to 5 wt. %, antioxidants in an amount from 0.1 to 10 wt. %, e.g. 0.5 to 5 wt. % or to 5 wt. %, plasticizers in an amount from 0.1 to 10 wt. %, e.g. 0.5 to 5 wt. % or 1 to 5 wt. %, softeners in an amount from 0.1 to 10 wt. %, e.g. 0.5 to 5 wt. % or 1 to 5 wt. %, fillers in an amount from 0.1 to 10 wt. %, e.g. 0.5 to 5 wt. % or 1 to 5 wt. %, reinforcing pigments in an amount from 0.1 to 10 wt. %. e.g. 0.5 to 5 wt. % or 1 to 5 wt. %, carbon blacks in an amount: from 0.1 to 10 wt. %, e.g. 0.5 to 5 wt. % or 1 to 5 wt. %, microcrystalline waxes in an amount from 0.1 to 5 wt. %, e.g. 0.5 to 3 wt. % or 1 to 2 wt. % and amiozonants in an amount from 0.05 to 5 wt. %, e.g. 0.1 to 4 wt. % or 0.5 to 3 wt. %.

It should be understand, unless otherwise indicated, that the wt. % of the articles identified above includes the total of a blend of two or more components. For example, the wt. % of carbon black may be the total wt. % when two or more carbon blacks are blended together in an article.

In one embodiment, substituted triazine compositions of the present invention may be used as friction modifiers to be applied on the sliding surfaces of a high-density magnetic recording medium such as CD, DVD, HD-DVD, Blu-Ray Discs and similar mediums, or to sliding or rotating members of micro-machines. In such applications the substituted triazine compositions of the present invention are capable of covering friction surface in a necessarily smallest amount to thereby reduce friction coefficient of the sliding surfaces, and such that not only being capable of improving the wear resistance but also sustaining such effect as long as possible. The substituted triazine compositions of the present invention can successfully reduce burn-in, improve wear resistance and keep the friction coefficient low even when supplied onto the surface moving under a friction condition which is severe enough for the conventional lubricating oil or lubricant such as grease to cause breakage of the oil film. In one embodiment, substituted triazine compositions of the present invention exhibit an excellent friction modifying effect even when used without a lubricant base oil, and such triazines are successfully adoptable to micro-machines to which a large amount of lubricant cannot be supplied.

The rubber compositions comprising antiozonants of the present invention of this invention are particularly useful when manufactured into articles such as, for example, tires, motor mounts, rubber bushings, power belts, printing rolls, rubber shoe heels and soles, rubber floor tiles, caster wheels, elastomer seals and gaskets, conveyor belt covers, hard rubber battery cases, automobile floor mats, mud flap for trucks, ball mill liners, windshield wiper blades and the like may also be used in articles such as boots for the nuclear industry and windshield wipers.

### Examples

A 2 liter jacketed round bottom flask, fitted with a thermocouple, a condenser set for reflux, nitrogen purge inlet, a semicircular paddle stirrer with an electric motor drive, and a thermostated circulation bath for the jacket.

The nitrogen purge, a slow bleed, was started. A 500 gram mixture of 62.80 wt% of N-1,4-dimethylpentyl-p-phenylenediamine (MW 206, 314 grams, 1.524 moles), 36.87 wt% of Flexzone™ 4L (N,N'-bis(1,4-dimethylpentyl)-para-phenylenediamine; MW 304, 184.6 grams, 0.606 moles) and 0.33 wt% of para-phenylenediamine (MW 108, 1.65 grams, 0.015 moles), and 392.5 grams of anhydrous isopropanol (d = 0.785; 500 mL) were charged to the vessel. The stirred mixture was cooled to 10°C, (the set point on the jacket was kept at 5°C), The cyanuric chloride (MW 184.4, 94.7 grams, 0.508 moles) was added in 20 gram portions to the stirred mixture, one every 20 minutes. The temperature rose up to about 20°C between additions, and was allowed to fall to 10-12°C before the each new portion of cyanuric chloride. It is important that the temperature not rise above 25°C during the cyanuric chloride addition.

After the last portion, the temperature was allowed to rise to 25°C and was held there for about half an hour. Then the set point was raised to 80°C for 2 hours. After 2 hours at 80°C the reaction was sampled for composition. HPLC indicated a significant amount of residual N-1.4-dimethylpentyl-p-phenylenediamine, so the mixture was cooled to 20°C and 11.9 grams (0.0645 moles) of cyariuhc chloride was added in portions until the residual N-1,4-dimethylpentl-p-phenylenediamine was below 1% relative to the 2,4,6-tris(N-1,4-dimethylpentyl-p-phenylenediamino)-1,3,5-triazine intermediate in the reaction mixture. The mixture became very thick in the latter part of the cyanuric chloride addition until it was neutralized. No vacuum fractional distillation was used to remove 2,4,6-tris(N-1,-4-dimethylpentyl-p-phenylenediamino)-1,3,5-triazine intermediate from the Flexzone 4L.

When the reaction was complete, mixture was cooled to 50°C and the 15 % NaOH (MW 40, 462.5 grams, 1.73 moles solution was added dropwise over an hour. At the end, the pH of the mixture was 12.6. The temperature was raised back up to 85°C and the stirring stopped to allow the phases to separate. The lower clear brine phase was drained. The mixture, still at 75-85°C, was washed with 200 mL portions of fresh water.

The washed product was stripped on the rotary evaporator until no more liquid distilled, full vacuum, -5 mbar, 100°C bath. Yield = 491.5 grams, Theory = 543.4 grams, 90.4%.

The stripped products were analyzed for the Durazone 37 (2,4,6-tris(N-1,4-dimethylpentyl-p-phenylenediamino)-1,3,5-triazine; MW 652) component by HPLC. The Durazone 37 component was 68% in the product. Flexzone 4L was added to the product so that the final Durazone 37 concentration was 63%. The properties of the composition of Example 1 are shown in Table 1.

### Comparative Example A

In a 3-litter, four-necked, round-bottomed flask equipped with a thermometer, a mechanical stirrer, a condenser, and a powder funnel was placed a solution of 316.8 grams (1.65 moles) of 4-amino-N-(1,3-dimethylbutyl)aniline in 1500 ml of isopropanol. The temperature of the solution was adjusted to 30°C and 92.2 grams (0.5 mole) of cyanuric chloride was added over 1/2 hour period keeping the temperature between 30 to 40°C. The reaction mixture was refluxed for 1 1/2 hours. The reaction was followed by high pressure liquid chromatography by observing the disappearance of the starting amine, and the conversion of the intermediate monoand bis-substituted compounds to the final tris-substituted product. 2,4,6-tris(N-1,3-dimethylbutyl-p-phenylenediamino)-1,3,5-triazine trihalide was separated from the reaction mixture using vacuum fractional distillation. After cooling the reaction mixture to 60°C 120 grams (1.5 moles) of 50 percent sodium hydroxide solution was added dropwise over 1 hour period. The sodium chloride was removed by filtration at 40°C. The filtrate was charged back to the reaction flask, and 250 ml of water was added dropwise. The Durazone 37 compound precipitated, and was removed by filtration, M.P. 124-127°C. The yield was 82.6 percent. The infrared spectrum was consistent with the structure. Relative area HPLC analysis of the product showed it to be 95.3 percent pure,

### Sinter Test

Sintering test is measured by taking a known quantity of sample (~10 g) in a small sintering unit and placing the unit in an oven maintained at a pre-set temperature (~40°C) for a specific period of time (16-24 hrs) under a known pressure of 2 psig (1.69 MPa). The sintering is quantified by the resulting height of compaction in mm.

Simering index is based on following scale: 1 - Loose and free lowing; 2 - Slightly packed, flows out with slight probe: 3 - Packed, but brakes up easily with slight probe; 4 Packed, but breaks up with effort; 5 - Packed, will not break up except with extreme effort; 6 - Sintered, rock like material.

Table 1 illustrates the benefits of the compositions of the examples 1-2 over conventional triazine compounds prepared by the process in comparative example A. Flexamine™ G and Naugard™ both from Chemtura Corporation, are provided for a comparison of the sinter index to other antioxidants.

| **Table 1** | | | | |
|---|---|---|---|---|
| Composition % | Example 1 | Compo Ex. A | Flexamine™ G* | Naugard™ Q** |
| N,-1,3-dimethylpentyl-p-phenylenediamine (Flexzone 4L) | 35% | 0% | -- | -- |
| 2,4,6-tris(N-1,3-dimethylbutyl-p-phenylenediamino)-1,3,5-triazine (Durazone 37) | 65% | 100% | -- | -- |
| Physical Property Sinter index (mm) | Liquid Not subject to sintering | Solid 5 (14 mmm) | Solid 2 (6 mm) | Solid 1 (1 mm) |

| | | | | |
|---|---|---|---|---|
| * Blend of diarylamine-ketone reaction product (65%) and N,N'-diphenyl-p-phenylenediamine (35%) ** Polymerized 1,2-dihydro-2,2-trimethlyquinoline | | | | |

### Examples 2 and 3/Comparative Examples B-E

In examples 2 and 3 the articles were made in the amounts shown in Table 3. Comparative examples B-E were also made in the amounts in parts per hundred of rubber (phr) shown in Table 3. The general mixing procedure is given as follows. In a first pass the rubber, two thirds of the carbon black, and zinc oxide are charged to a laboratory internal mixer and mixed for 1.5 minutes. The ram is raised and a sweep performed. Then the remaining carbon black, processing oil, stearic acid, wax and antiozonants are added. The ram is lowered and the materials are then mixed for 1.5 minutes. The ram is raised and a sweep performed. The ram is lowered and mixing continued until the batch reaches a temperature of 150°C, when it is discharged.

For the second pass, half of the master batch mixed in the first pass is charged to the mixer. The curatives, accelerator and sulfur are added, then the remaining half of the masterbatch. The materials are mixed for one minute, then the ram is raised and a sweep performed. The rani is flowered and mixing continued untill the batch reaches an internal temperature of 98°C when it is discharged a ram is lowered and mixing continued until the batch reaches an internal temperature of 104°C.

| **Table 2** | | | | | | |
|---|---|---|---|---|---|---|
| Component | Comp. Ex. B | Ex. 2 | Comp. Ex. C | Comp. Ex. D | Ex.3 | Comp. Ex. E |
| First Pass | | | | | | |
| SMR 5CV | 55 | 55 | 55 | 55 | 55 | 55 |
| N-339 BLACK | 30 | 30 | 30 | 30 | 30 | 30 |
| N-660 BLACK | 20 | 20 | 20 | 20 | 20 | 20 |
| KADOX 911C | 3 | 3 | 3 | 3 | 3 | 3 |
| (IISDENE 1203 | 45 | 45 | 45 | 45 | 45 | 45 |
| CIRCOSOL 4240 | 7 | 7 | 7 | 7 | 7 | 7 |
| KADOX 911C | 3 | 3 | 3 | 3 | 3 | 3 |
| STEARIC ACID | 1 | 1 | 1 | 1 | 1 | 1 |
| SUN PROOF IMPROVED | 2 | 2 | 2 | 2 | 2 | 2 |
| FLEXZON E 7P* | 2 | | | 3 | | |
| DURAZONE 37 | | 1.4 | 2 | | 2.1 | 3 |
| FLEXZONE 4L | | 0.6 | | | 0.9 | |
| | | | | | | |

| Second Pass | | | | | | |
|---|---|---|---|---|---|---|
| DELAC NS** | 1 | 1 | 1 | 1 | 1 | 1 |
| CRYSTEXOT20 | 2 | 2 | 2 | 2 | 2 | 2 |

| | | | | | | |
|---|---|---|---|---|---|---|
| * from Chemtura Corporation (N-1-3-dimethylbutyl-N'phenyl-p-phenylenediamine) MW 268. ** from Chemtura Company (N-tert-butyl-2-benzothiazolylsulfenamide, (TUBS)) | | | | | | |

The properties of examples 2 and 3 and comparative examples B-E are shown in Table 3. Note that in Table 3, cure characteristics were determined using a Monsanto rheometer ODR 2000 (1° ARC, 100 cpm): MH is the maximum torque and ML is the minimum torque. Scorch safety (tₛ1) and (tₛ2) is the time to I and 2 units, respectively, above minimum torque (ML), cure time (t'50) is the time to 50% of delta torque above minimum and cure time (t'90) is the time to 90% of delta torque above minimum.

| **Table 3** | | | | | | | |
|---|---|---|---|---|---|---|---|
| | | Comp. Ex. B | Ex.2 | Comp. Ex. C | Comp. Ex. D | Ex.3 | Comp. Ex. E |
| Mooney Viscosity @ 100°C (ASTM D3346-90) Mooney Scorch @ 135°C | | 37 | 35 | 32 | 33.5 | 33 | 31.5 |
| 3 Pt Rise Time. minutes | | 13.23 | 16.18 | 17.73 | 13.08 | 15.4 | 16.74 |
| 18 Pt Rise Time. minutes | | 15.79 | 19.05 | 19.79 | 15-43 | 17.95 | 18.7 |
| Cure Properties - Rheometer @ 160°C | | | | | | | |
| | ML*, dNm | 4.42 | 4.09 | 3.67 | 3.99 | 3.89 | 3.71 |
| | MH**, dNm | 36.01 | 36.09 | 36.32 | 34.79 | 35.96 | 36.28 |
| tₛ1, minutes | | 3.23 | 3.67 | 4.31 | 3.28 | 3.64 | 4.31 |
| tₛ2, minutes | | 4.12 | 4.47 | 4.98 | 3.96 | 4.37 | 4.96 |
| t'50, minutes | | 6.06 | 6.16 | 632 | 5.55 | 5.91 | 6.26 |
| t'90, minutes | | 7.58 | 7.54 | 7.67 | 7.09 | 7.18 | 7.49 |
| Time to cure @ 160°C (minutes) | | 10 | 10 | 10 | 9 | 9 | 9 |
| Tensile at Room Temp. MPa | | 19.8.5 | 21.05 | 18.71 | 21.12 | 20.15 | 19.62 |
| % Elongation | | 520 | 556 | 500 | 566 | 543 | 531 |
| | M 100, MPa | 1.88 | 1.94 | 1.98 | 1.72 | 1.92 | 1.95 |
| | M 200, MPa | 4.81 | 4.76 | 4.98 | 4.45 | 4.83 | 4.87 |
| | M 300, MPa | 9.16 | 8.03 | 9.24 | 8.64 | 9 | 4.01 |
| | M 400, MPa | 14.01 | 13.67 | 13.98 | 1.3.44 | 13.59 | 13.62 |
| | M 500, MPa | 18.92 | 18.59 | | 18.18 | 18.1 | 18.28 |
| Shore A Hardness | | 54 | 55 | 55 | 52 | 55 | 55 |
| Die C Tear. KN/m | | 3834 | 37.96 | 4.5.24 | 53.77 | 42.07 | 43.02 |

| | | | | | | | |
|---|---|---|---|---|---|---|---|
| * ML is minimum torque. ** MH is maximum torque. | | | | | | | |

The Scorch safety of compositions having the liquid substituted triazine compositions of examples 2 and 3 are equivalent to those of comparative examples B-E. In addition, other properties such as tensile strength, elongation, hardness and tear strength are similar. Thus, the liquid substituted triazine compositions do not sacrifice any properties when compared so compositions that have been shown to sinter during storage and transportation.

The dynamic and static ozone properties of Example 2 and 3, as well as comparative Examples B-E are shown in Table 4. A crack rating of 10 for the dynamic testing indicates no cracks and a lower rating number indicates a larger crack. For the appearance rating. RB refers to red brown, SL-.RB refers to slightly red-brown and DB refers to dull black. For the static testing. OK indicates no cracks. Examples 2 and 3 are have similar dynamic and static properties as the comparative Examples B-E.

| **Table 4** | | | | | | |
|---|---|---|---|---|---|---|
| | Comp. Ex. B | Ex.2 | Comp. Ex.C | Comp. Ex. D | Ex.3 | Comp. Ex. E |
| Dynamic Ozone Belt Testing | | | | | | |
| 50 PPHM* Ozone at 40°C | | | | | | |
| 24 hours | 10 | 10 | 10 | 10 | 10 | 10 |
| 48 hours | 10 | 10 | 10 | 10 | 10 | 10 |
| 72 hours | 9 | 9 | 9 | 10 | 10 | 10 |
| 120 hours | 9 | 8 | 7 | 9 | 10 | 8.5 |
| 168 hours | 8 | 8 | 6 | 8.5 | 9 | 8 |
| 192 hours | 7 | 6 | 5 | 8 | 8 | 7 |
| 216 hours | 7 | 6 | 5 | 8 | 8 | 6 |
| 264 hours | 7 | 6 | 5 | 8 | 8 | 6 |
| 336 hours | 6 | 5 | 4 | 7 | 6 | 5 |
| | | | | | | |
| Appearance | RB | SL.RB | DB | RB | SL.RB | DB |
| | | | | | | |
| Static Ozone Crack Resistance | | | | | | |
| 50 PPHM Ozone at 40°C | | | | | | |
| 2 hours | OK | OK | OK | OK | OK | OK |
| 4 hours | OK | OK | OK | OK | OK | OK |
| 6 hours | OK | OK | OK | OK | OK | OK |
| 8 hours | OK | OK | OK | OK | OK | OK |
| 24 hours | OK | OK | OK | OK | OK | OK |
| 48 hours | OK | OK | OK | OK | OK | OK |
| 72 hours | OK | OK | OK | OK | OK | OK |
| 120 hours | OK | OK | OK | OK | OK | OK |
| 144 hours | OK | OK | OK | OK | OK | OK |
| 216 hours | OK | OK | OK | OK | OK | OK |
| 336 hours | OK | OK | OK | OK | OK | OK |
| 384 hours | OK | OK | OK | OK | OK | OK |
| 456 hours | OK | OK | OK | OK | OK | OK |

| | | | | | | |
|---|---|---|---|---|---|---|
| * parts per hundred million | | | | | | |

In view of the many changes and modifications that can be made without departing from principles underlying the present invention, reference should be made to the appended claims for an understanding of the scope of the protection to be afforded the invention.

The disclosures of all patents, articles and other materials described herein are hereby incorporated, in their entirety, into this specification by reference. Compositions described as "comprising" a plurality of defined components are to be construed as including compositions formed by admixing the defined plurality of defined components. The principles, preferred embodiments, and modes of operation of the present invention have been described in the foregoing specification. What the Applicants submit is their invention, however, is not to be construed as limited to the particular embodiments disclosed, since the disclosed embodiments are regarded as illustrative rather than limiting. Changes can be made by those skilled in the art without departing from the spirit of the invention.

## Claims

1. A composition comprising:
a compound of structure (I) comprising: 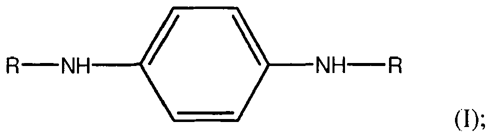 and
a compound of structure (II) comprising: 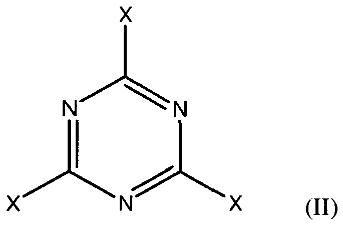
wherein X comprises the formula: 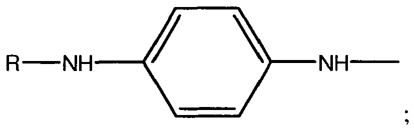 and
wherein R is selected from the group consisting of C₃-C₁₈ alkyl, C₃-C₁₈ cycloalkyl, and C₆-C₁₈ aryl, wherein the composition has a Brookfield viscosity at 100°C of from 10 to 20,000 cPs.

2. The composition of claim 1, wherein R is selected from the group consisting of 1,4-dimethylpentyl, 1,2-dimethylbutyl, 1-methylheptyl, cyclohexyl, diphenyl, and sec-butyl.

3. The composition of claim 1, wherein the compound of structure I is present in an amount from 15 to 75 weight percent based on the total mass of the composition.

4. The composition of claim 1, wherein the compound of structure II is present in an amount from 15 to 75 weight percent based on the total mass of the composition.

5. The composition of claim 1, wherein the compound of structure II comprises: 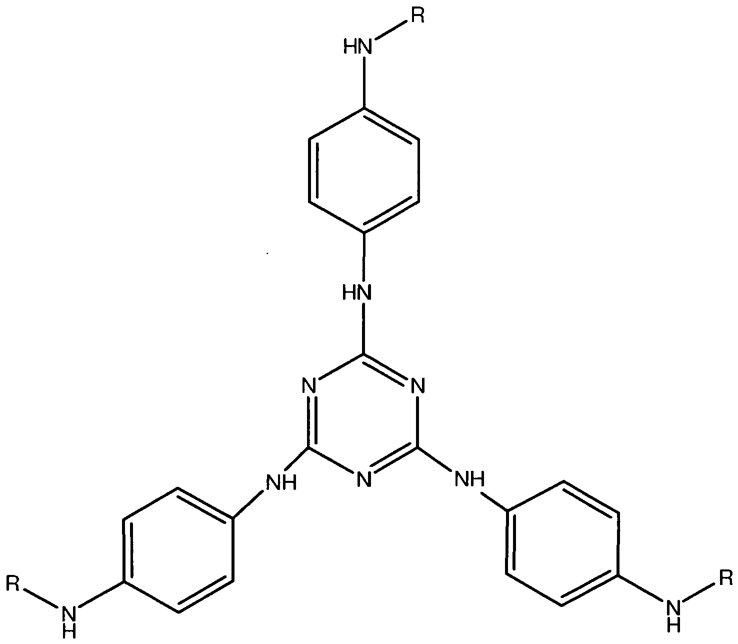 wherein R is selected from the group consisting of C₃-C₁₈ alkyl, C₃-C₁₈ cycloalkyl and C₆-C₁₈ aryl.

6. An ozone resistant article comprising:
an unsaturated elastomer; and
a composition according to claims 1-5.

7. The article of claim 6, wherein the weight ratio of the composition to the unsaturated elastomer is from 0.1:100 to 3.0:100.

8. A method for producing an antiozonant mixture comprising a substituted triazine and a N-alkyl-1,4-phenylenediamine, the method comprising reacting N-alkyl-1,4-phenylenediamine with cyanuric chloride in the presence of a N,N'-dialkyl-1,4-phenylenediamine to form the antiozonant mixture.

9. The method of claim 8, further comprising reacting p-phenylenediamine and an aldehyde or ketone to form the N-alkyl-1,4-phenylenediamine.

10. The method of claim 8, wherein the reacting of the p-phenylenediamine and the aldehyde or the ketone also forms the N,N'-dialkyl-1,4-phenylenediamine.

11. The method of claim 8, wherein the N-alkyl-1,4-phenylenediamine compound is in an amount from 15 to 75% based on the total mass of the antiozonant mixture.

12. The method of claim 8, wherein the substituted triazine compound is in an amount from 15 to 75% based on the total mass of the antiozonant mixture.

13. The method of claim 8, further comprising adding the cyanuric chloride to the N-alkyl-1,4-phenylenediamine mixture at a temperature from 0 to 25°C.

14. The method of claim 8, wherein the N-alkyl-1,4-phenylenediamine mixture is reacted with the cyanuric chloride at a temperature from 50 to 200°C.

15. The method of claim 8, wherein the substituted triazine compound has the general formula: 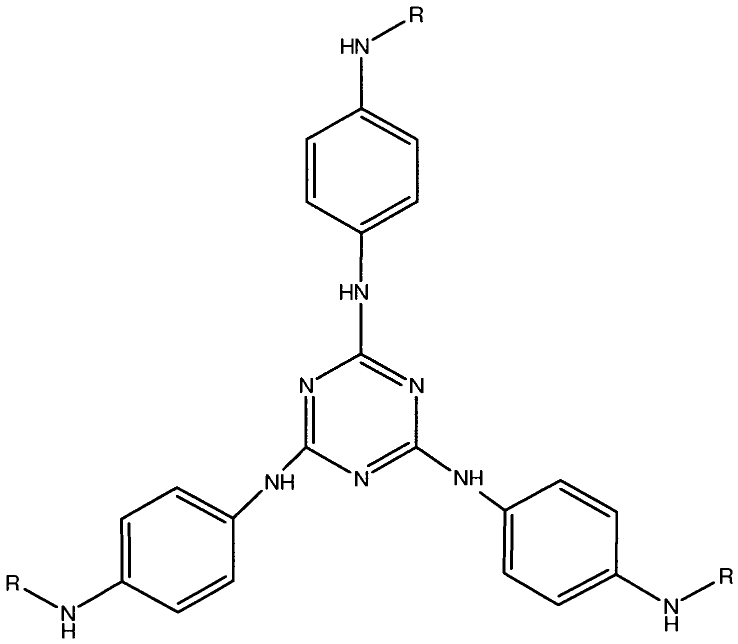 wherein R is selected from the group consisting of C₃-C₁₈ alkyl, C₃-C₁₈ cycloalkyl and C₆-C₁₈ aryl.

## Patentansprüche

1. Eine Zusammensetzung enthaltend:
eine Verbindung der Struktur (I) enthaltend: 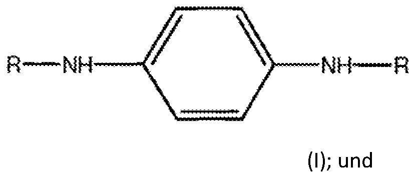
eine Verbindung der Struktur (II) enthaltend: 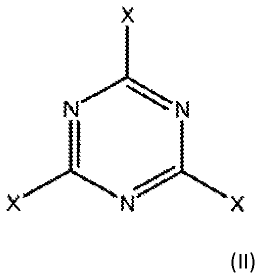
worin X die Formel: 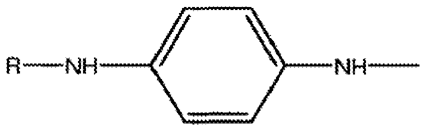 umfasst; und
worin R aus der aus C₃-C₁₈-Alkyl, C₃-C₁₈-Cycloalkyl und C₆-C₁₈-Aryl bestehenden Gruppe ausgewählt wird, worin die Zusammensetzung eine Brookfield-Viskosität bei 100°C von 10 bis 20.000 cPs aufweist.

2. Die Zusammensetzung des Anspruchs 1, worin R aus der aus 1,4-Dimethylpentyl, 1,2-Dimethylbutyl, 1-Methylheptyl, Cyclohexyl, Diphenyl und sec-Butyl bestehenden Gruppe ausgewählt wird.

3. Die Zusammensetzung des Anspruchs 1, worin die Verbindung der Struktur I in einer Menge von 15 bis 75 Gewichtsprozent bezogen auf die Gesamtmasse der Zusammensetzung vorliegt.

4. Die Zusammensetzung des Anspruchs 1, worin die Verbindung der Struktur II in einer Menge von 15 bis 75 Gewichtsprozent bezogen auf die Gesamtmasse der Zusammensetzung vorliegt.

5. Die Zusammensetzung des Anspruchs 1, worin die Verbindung der Struktur II 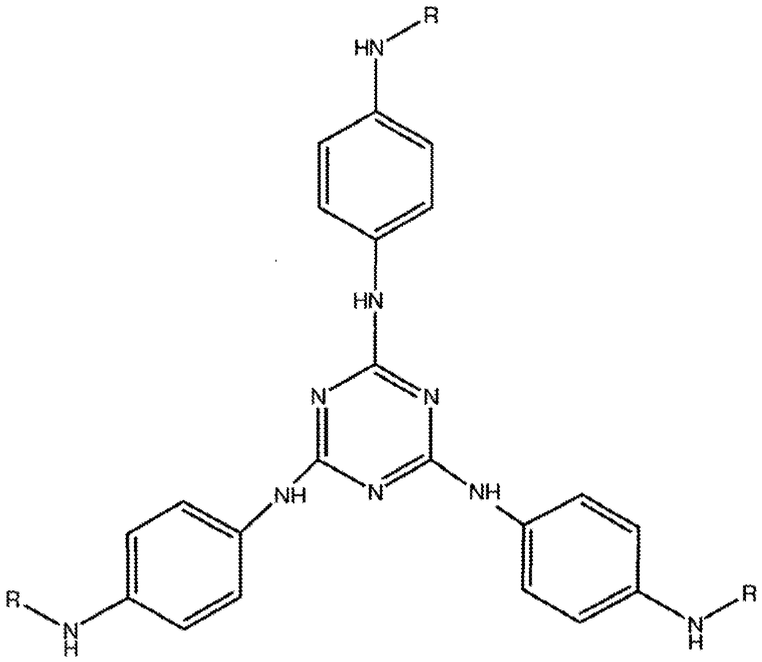 umfasst, worin R aus der aus C₃-C₁₈-Alkyl, C₃-C₁₈-Cycloalkyl und C₆-C₁₈-Aryl bestehenden Gruppe ausgewählt wird.

6. Ein ozonresistenter Gegenstand enthaltend:
ein ungesättigtes Elastomer; und
eine Zusammensetzung gemäß Ansprüchen 1-5.

7. Der Gegenstand des Anspruchs 6, worin das Gewichtsverhältnis der Zusammensetzung zu dem ungesättigten Elastomer von 0,1:100 bis 3,0:100 beträgt..

8. Eine Methode zur Herstellung einer Ozonschutzmittelmischung enthaltend ein substituiertes Triazin und ein N-Alkyl-1,4-Phenylendiamin, die Methode enthaltend die Umsetzung von N-Alkyl-1,4-Phenylendiamin mit Cyanurchlorid in Gegenwart eines N,N'-Dialkyl-1,4-Phenylendiamins, um die Ozonschutzmittelmischung zu bilden.

9. Die Methode des Anspruchs 8, weiterhin enthaltend die Umsetzung von p-Phenylendiamin und einem Aldehyd oder Keton, um das N-Alkyl-1,4-Phenylendiamin zu bilden.

10. Die Methode des Anspruchs 8, worin die Umsetzung des p-Phenylendiamins und des Aldehyds oder Ketons ebenso das N,N'-Dialkyl-1,4-phenylendiamin bildet.

11. Die Methode des Anspruchs 8, worin die N-Alkyl-1,4-phenylendiaminverbindung in einer Menge von 15 bis 75 % bezogen auf die Gesamtmasse der Ozonschutzmittelmischung vorliegt.

12. Die Methode des Anspruchs 8, worin die substituierte Triazinverbindung in einer Menge von 15 bis 75 % bezogen auf die Gesamtmasse der Ozonschutzmittelmischung vorliegt.

13. Die Methode des Anspruchs 8, weiterhin enthaltend die Zugabe des Cyanurchlorids zu der N-Alkyl-1,4-Phenylendiaminmischung bei einer Temperatur von 0 bis 25°C.

14. Die Methode des Anspruchs 8, worin die N-Alkyl-1,4-Phenylendiamin-Mischung mit Cyanurchlorid bei einer Temperatur von 50 bis 200°C umgesetzt wird.

15. Die Methode des Anspruchs 8, worin die substituierte Triazinverbindung die allgemeine Formel: 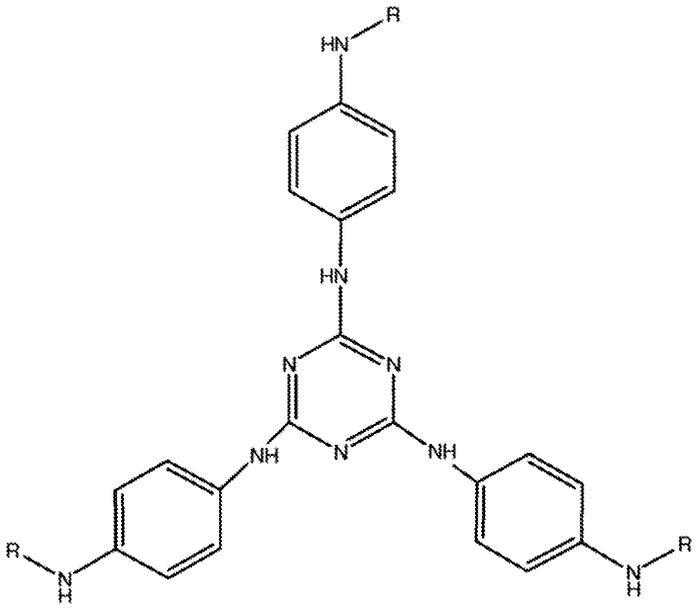 hat, worin R aus der aus C₃-C₁₈-Alkyl, C₃-C₁₈-Cycloalkyl und C₆-C₁₈-Aryl bestehenden Gruppe ausgewählt wird.

## Revendications

1. Composition comprenant :
un composé de structure (I) comprenant : 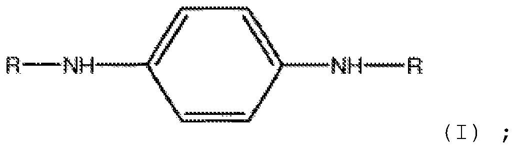 et
un composé de structure (II) comprenant : 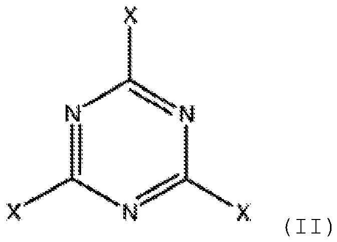
dans laquelle X comprend la formule : 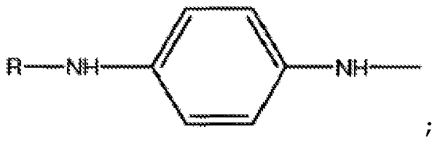 et
dans laquelle R est choisi dans le groupe consistant en alkyle en C₃-C₁₈, cycloalkyle en C₃-C₁₈ et aryle en C₆-C₁₈, la composition ayant une viscosité Brookfield à 100°C de 10 à 20 000 cPs.

2. Composition selon la revendication 1, dans laquelle R est choisi dans le groupe consistant en 1,4-diméthylpentyle, 1,2-diméthylbutyle, 1-méthylheptyle, cyclohexyle, diphényle et sec-butyle.

3. Composition selon la revendication 1, dans laquelle le composé de structure I est présent dans une quantité de 15 à 75 pour cent en poids sur la base de la masse totale de la composition.

4. Composition selon la revendication 1, dans laquelle le composé de structure II est présent dans une quantité de 15 à 75 pour cent en poids sur la base de la masse totale de la composition.

5. Composition selon la revendication 1, dans laquelle le composé de structure II comprend : 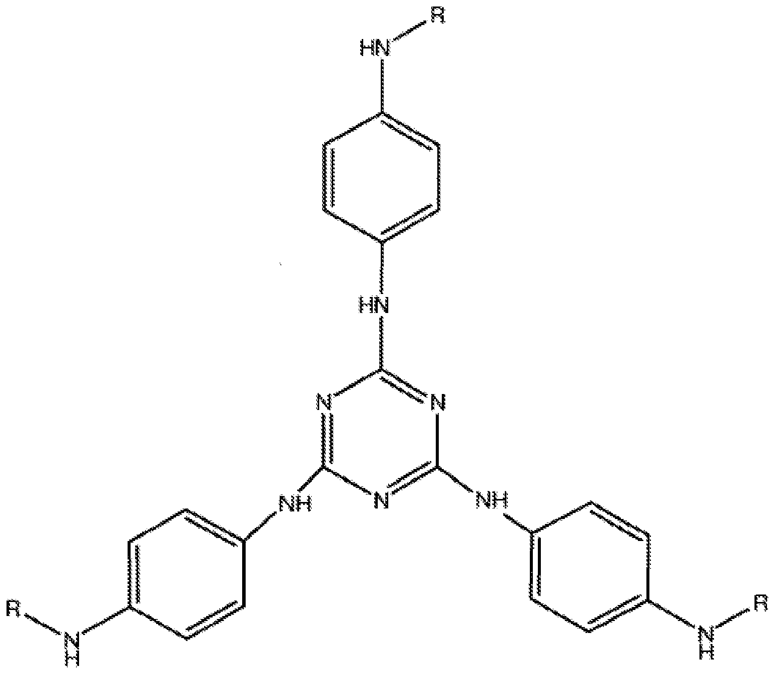 dans laquelle R est choisi dans le groupe consistant en alkyle en C₃-C₁₈, cycloalkyle en C₃-C₁₈ et aryle en C₆-C₁₈.

6. Article résistant à l'ozone comprenant :
un élastomère insaturé ; et
une composition selon les revendications 1 à 5.

7. Article selon la revendication 6, dans lequel le rapport en poids de la composition à l'élastomère insaturé est de 0,1:100 à 3,0:100.

8. Procédé de fabrication d'un mélange antiozonant comprenant une triazine substituée et une N-alkyl-1,4-phénylènediamine, le procédé comprenant la réaction de la N-alkyl-1,4-phénylènediamine avec du chlorure cyanurique en présence d'une N,N'-dialkyl-1,4-phénylènediamine pour former le mélange antiozonant.

9. Procédé selon la revendication 8, comprenant en outre la réaction de la p-phénylènediamine et d'un aldéhyde ou d'une cétone pour former la N-alkyl-1,4-phénylènediamine.

10. Procédé selon la revendication 8, dans lequel la réaction de la p-phénylènediamine et de l'aldéhyde ou de la cétone forme également la N,N'-dialkyl-1,4-phénylènediamine.

11. Procédé selon la revendication 8, dans lequel le composé N-alkyl-1,4-phénylènediamine est dans une quantité de 15 à 75 % sur la base de la masse totale du mélange antiozonant.

12. Procédé selon la revendication 8, dans lequel le composé triazine substituée est dans une quantité de 15 à 75 % sur la base de la masse totale du mélange antiozonant.

13. Procédé selon la revendication 8, comprenant en outre l'addition du chlorure cyanurique au mélange de N-alkyl-1,4-phénylènediamine à une température de 0 à 25°C.

14. Procédé selon la revendication 8, dans lequel le mélange de N-alkyl-1,4-phénylènediamine est mis à réagir avec le chlorure cyanurique à une température de 50 à 200°C.

15. Procédé selon la revendication 8, dans lequel le composé triazine substituée a la formule générale : 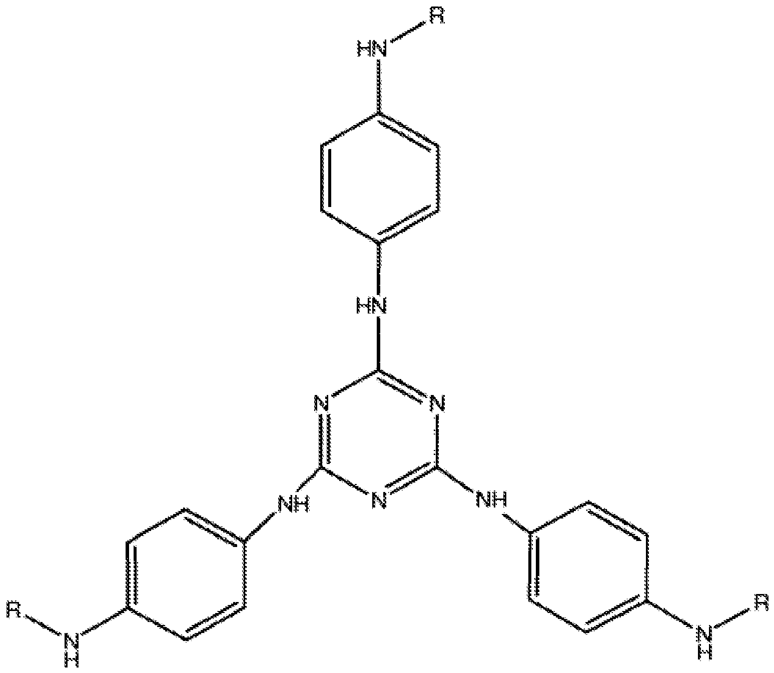 dans laquelle R est choisi dans le groupe consistant en alkyle en C₃-C₁₈, cycloalkyle en C₃-C₁₈ et aryle en C₆-C₁₈.
